# EUROPEAN PATENT APPLICATION

(11) **EP 4 745 377 A2**
(43) Date of publication of application: **20.05.2026**
(21) Application number: 25210561.4
(22) Date of filing: 22.10.2025
(51) Int. Cl.: F02C 3/22, F02C 7/232, F02C 9/40

(54) **HYDROGEN ASSISTED COMBUSTION AND ENGINE COOLING**

(30) Priority: 22.10.2024 US 202418923015
(71) Applicant: RTX Corporation, Farmington, CT 06032 (US)
(72) Inventor: SNYDER, Timothy, Glastonbury, 06033 (US)
(74) Representative: Dehns

(57) **Abstract**

A fuel delivery system for a combustor (300) of a gas turbine engine (20) has a primary fuel tank (518) configured to store liquid hydrogen (510) and a secondary fuel tank (558) configured to store fuel (550), such as Jet A or SAF. The fuel (510,550) being provided and mixed in the jet engine to alleviate the production of contrails. In addition, the primary fuel tank (518) may be a cryogenic tank (518) to enable the storage of liquid hydrogen, or liquid natural gas. As a result, the primary fuel (510) may be utilized to cool the secondary fuel (550) and/or the gas turbine engine (20).

## Description

### BACKGROUND

Contrails, or condensation trails, are formed when water vapor from jet engine exhaust freezes into ice crystals at high altitudes. Their impact on the environment and climate can be significant. It is believed that contrails may be related to global warming. The belief is that contrails contribute to global warming by trapping heat in the atmosphere, similar to greenhouse gases. They can enhance the natural greenhouse effect, particularly at night. In addition, contrails can evolve into cirrus clouds, which can further impact weather patterns and local climates by affecting precipitation and solar radiation. Studies have indicated that the radiative forcing from contrails may be comparable to that of carbon dioxide emissions from aviation, highlighting their importance in climate discussions.

For a contrail to form, suitable conditions must occur immediately behind a jet engine in the expanding engine exhaust plume. A contrail will form if, as exhaust gases cool and mix with surrounding air, the humidity becomes high enough (or, equivalently, the air temperature becomes low enough) for liquid water condensation to occur. The level of humidity reached depends on the amount of water present in the surrounding air, the temperature of the surrounding air, and the amount of water and heat emitted in the exhaust. Atmospheric temperature and humidity at any given location undergo natural daily and seasonal variations and hence, are not always suitable for the formation of contrails.

If sufficient humidity occurs in the exhaust plume, water condenses on particles to form liquid droplets. As the exhaust air cools due to mixing with the cold local air, the newly formed droplets rapidly freeze and form ice particles that make up a contrail. Thus, the surrounding atmosphere's conditions determine to a large extent whether or not a contrail will form after an aircraft's passage. Because the basic processes are very well understood, contrail formation for a given aircraft flight can be accurately predicted if atmospheric temperature and humidity conditions are known.

After the initial formation of ice, a contrail evolves in one of two ways, again depending on the surrounding atmosphere's humidity. If the humidity is low (below the conditions for ice condensation to occur), the contrail will be short-lived (non-persistent). Newly formed ice particles will quickly evaporate as exhaust gases are completely mixed into the surrounding atmosphere. The resulting line-shaped contrail will extend only a short distance behind the aircraft.

If the humidity is high (greater than that needed for ice condensation to occur), the contrail will be persistent. Newly formed ice particles will continue to grow in size by taking water from the surrounding atmosphere. The resulting line-shaped contrail extends for large distances behind an aircraft. Persistent contrails can last for hours while growing to several kilometers in width and 200 to 400 meters in height. Contrails spread because of air turbulence created by the passage of aircraft, differences in wind speed along the flight track, and possibly through effects of solar heating.

The FAA has showed that it is possible to reduce the presence of non-volatile particle matter (nvPM) with the introduction of hydrogen (H₂). It has been determined that if the system increases the hydrogen content in the fuel, you can reduce the mass of these nvPM particles as well as the number of these nvPM particles. Ground based systems have been demonstrated burning 100% hydrogen. However these systems require a large volume of hydrogen, which is not currently practical for aircraft operation.

It is therefore a goal to prevent and minimize the likelihood of persistent contrails from forming. However, the methodology to prevent the contrails from forming must be cost effective, not add significant additional weight to the aircraft, and not introduce additional safety concerns. Several solutions have been developed however, these solutions do not solve the situation without causing additional cost, weight, and or safety concerns.

### SUMMARY

According to one aspect of the present invention, to minimize the production of contrails, a fuel delivery system for a combustor of a gas turbine engine is proposed. The system may include a primary fuel tank, such as a cryogenic tank to store liquid hydrogen. A secondary fuel tank may be configured to store fuel such as Jet A or SAF. The primary fuel is fluidly connected from the primary fuel tank to a fuel nozzle and the secondary fuel is fluidly connected between the secondary fuel tank to a second fuel nozzle. A control valve may be configured to control the flow of liquid hydrogen in the primary fuel line and is provided a control signal from an engine control. The system primarily delivers the secondary fuel such as Jet A to the engine and the primary fuel may be utilized to ignite the engine and in small proportions to mix the fuel while operating. For example, the fuel may be provided at 97% Jet A to 3% hydrogen to minimize contrail production. Alternatively, the hydrogen may make up from 3% to 10% of the total fuel provided to the gas turbine engine.

Optionally, and in accordance with the above, the system may have sensors to sense the atmospheric conditions near the gas turbine engines. It is known that contrails do not form in all conditions and therefore, hydrogen does not need to be mixed in all conditions. The sensors may be mounted on or about the aircraft to determine temperature and humidity of the atmosphere about the aircraft. The sensors may provide an input to the engine control and open the control valve when contrails are likely to occur.

Optionally, and in accordance with any of the above, the system may incorporate avionic controls, wherein the avionic controls may provide an input to the engine control. The avionics controls may be configured to determine when abatement of contrails is desired and provide an input to the engine control. The avionics control may base the input based on information provided by the air traffic control. Alternatively, flight maps programmed into the avionics controls may indicate locations where contrail reduction is required.

Optionally, and in accordance with any of the above, the control valve is configured to deliver between 3% and 10% of hydrogen to the fuel nozzle.

Optionally, and in accordance with any of the above, the control valve is configured to deliver between 3% hydrogen to the fuel nozzle.

Optionally, and in accordance with any of the above, the system further comprises first cooling lines configured to allow the secondary fuel to cool the gas turbine engine and second cooling lines configured to allow the primary fuel to cool the secondary fuel.

Optionally, and in accordance with any of the above, the second cooling lines are configured to cool the gas turbine engine.

Optionally, and in accordance with any of the above, the primary tank is a cryogenic tank.

Optionally, and in accordance with any of the above, the primary tank comprises two or more cryogenic tanks.

Optionally, and in accordance with any of the above, the two or more cryogenic tanks are located in one or more wings of an aircraft.

Optionally, and in accordance with any of the above, the two or more cryogenic tanks are located in an engine wing mounted to the gas turbine engine.

According to another aspect of the present invention, there is provided a fuel delivery system that comprises a cryogenic tank, a secondary fuel tank configured to store fuel, a cooling line fluidly connecting the cryogenic tank and a secondary fuel line fluidly connecting the secondary fuel tank to a fuel nozzle, wherein the cooling line is configured to cool the gas turbine engine.

Optionally, and in accordance with any of the above, the cryogenic tank is configured to store one of liquid natural gas, liquid nitrogen, and liquid hydrogen.

According to another aspect of the present invention, there is provided a fuel system compriseing a cryogenic fuel tank configured to store a primary fuel comprising one of liquid natural gas, and liquid hydrogen; a secondary fuel tank configured to store fuel; a primary fuel line fluidly connecting the cryogenic fuel tank to a first fuel nozzle; a secondary fuel line fluidly connecting the secondary fuel tank to a second fuel nozzle; a control valve configured to control the flow of the primary fuel in the primary fuel line; and an engine control configured to control the control valve.

Optionally, and in accordance with any of the above, it is further possible to utilize the hydrogen to assist the engine when running at a low fuel input condition and eliminate lean fuel blowout. By increasing or inputting hydrogen into the fuel nozzle, the fuel will burn more efficiently, thereby minimizing the possibility of lean fuel blowout. In addition, the engine will produce less carbon monoxide and will have less unburned hydrocarbons.

In one embodiment, while on the ground, the gear box may receive power from a battery to drive the fan of the engine. As a result, the fuel required to keep the gas turbine engine running may be reduced. The result being lean fuel blowout or inefficient burning of the Jet A fuel. Thus, the addition of hydrogen during these conditions may be advantageous.

Optionally, and in accordance with any of the above, the engine control is configured to monitor engine operation and wherein the engine control is configured to open the control valve when a low fuel flow from the secondary fuel tank is present.

Optionally, and in accordance with any of the above, the gas turbine engine is configured to receive power from a battery.

Optionally, and in accordance with any of the above, the gas turbine engine is configured to receive power from a battery, wherein the engine control is configured to open the control valve when the gas turbine engine receives power from the battery.

Optionally, and in accordance with any of the above, the engine control is configured to monitor engine operation and wherein the engine control is configured to open the control valve when the gas turbine engine is in an idle position.

### BRIEF DESCRIPTION OF THE DRAWINGS

FIG. 1 is a partial cross-sectional illustration of a gas turbine engine;
FIG. 2A is a cross-sectional illustration of a combustor, in accordance with an embodiment of the present disclosure;
FIG. 2B is an enlarged cross-sectional illustration of the combustor of FIG. 2A showing a fuel nozzle located at the inlet of the combustor, in accordance with an embodiment of the present disclosure;
FIG. 2C is an enlarged cross-sectional illustration of a combustor utilizing a fuel nozzle located at an immersion distance away from an inlet of the combustor;
FIG. 3 is a cross section of an improved system for operation of a dual fuel application.
FIG. 4 illustrates a liquid hydrogen cryogenic tank.
FIG. 5 illustrates a portion of the example gas turbine engine, and in particular illustrates the arrangement of an example engine wing.

### DETAILED DESCRIPTION

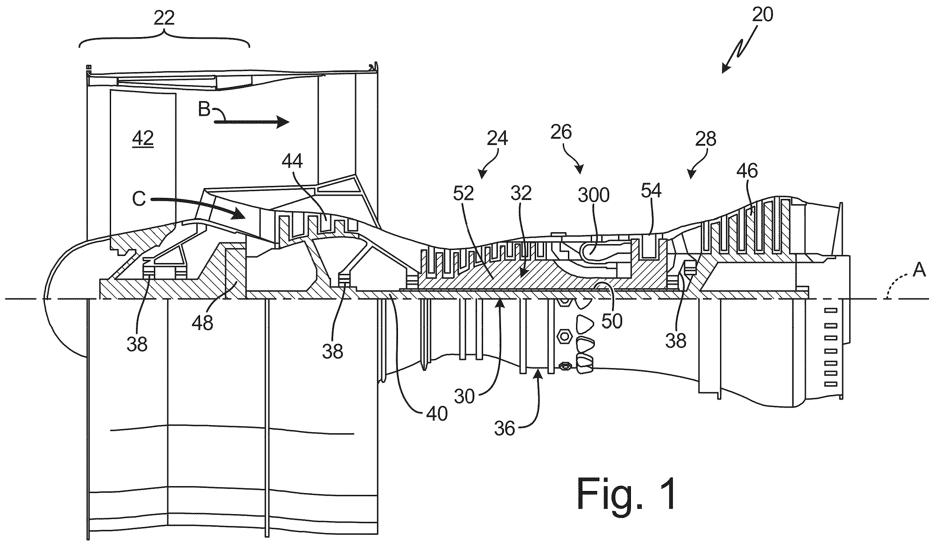

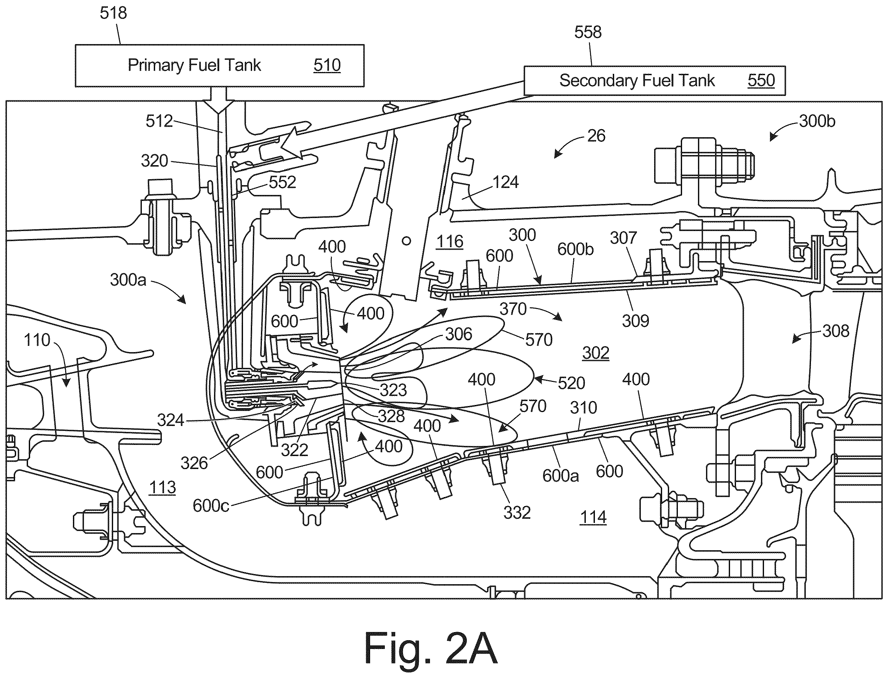

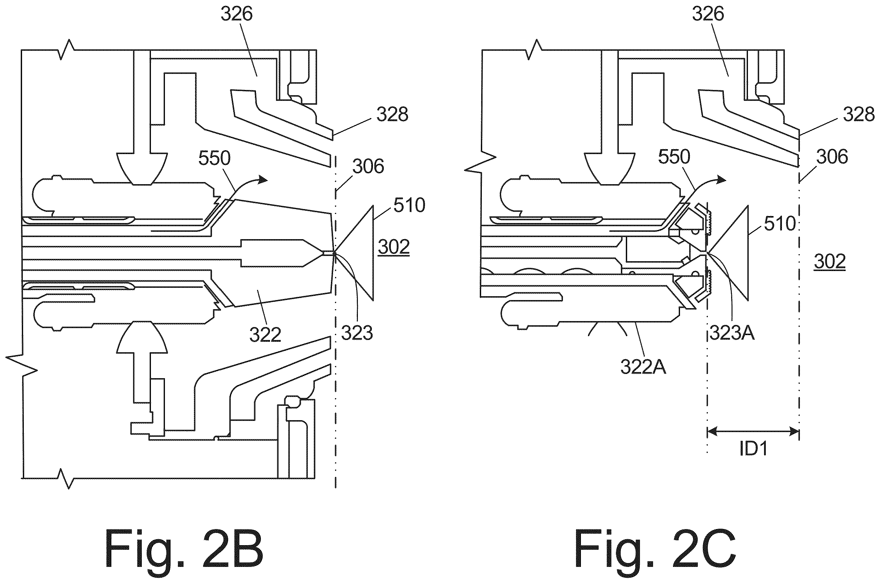

FIG. 1 and FIG. 2 A, B, and C, describe a turbofan engine that utilizes a dual fuel application. While the description to follow illustrates a turbofan engine, the system described may be applicable to any jet engine capable of dual fuel applications as taught in this application. The turbofan engine as taught in FIG. 1 and FIG. 2 A, B, and C is further described in US Patent 11,959,420 and is hereby incorporated by reference.

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 300 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 300, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight conditiontypically cruise at about 0.8 Mach and about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

Referring now to FIGS. 2A and FIG. 2B, with continued reference to FIG. 1, the combustor section 26 of the gas turbine engine 20 is illustrated in accordance with an embodiment of the present disclosure. The combustor 300 of FIGS. 2A and 2B is an impingement film float wall combustor. It is understood that while an impingement film float wall combustor is utilized for exemplary illustration, the embodiments disclosed herein may be applicable to other types of combustors for gas turbine engines including but not limited to double pass liner combustors, float wall combustors, and combustors with single wall liners. FIG. 2B is an enlarged illustration of a fuel nozzle 322 of the combustor 300 of FIG. 2A.

As illustrated, a combustor 300 defines a combustion chamber 302. The combustion chamber 302 includes a combustion area 370 within the combustion chamber 302. The combustor 300 includes an inlet 306 and an outlet 308 through which air may pass. The air may be supplied to the combustor 300 by a pre-diffuser 110. Air may also enter the combustion chamber 302 through other holes in the combustor 300 including but not limited to quench holes 310, as seen in FIG. 2A.

Compressor air is supplied from the compressor section 24 into a pre-diffuser 110, which then directs the airflow toward the combustor 300. The combustor 300 and the pre-diffuser 110 are separated by a dump region 113 from which the flow separates into an inner shroud 114 and an outer shroud 116. As air enters the dump region 113, a portion of the air may flow into the combustor inlet 306, a portion may flow into the inner shroud 114, and a portion may flow into the outer shroud 116.

The air from the inner shroud 114 and the outer shroud 116 may then enter the combustion chamber 302 by means of one or more primary apertures 307 in the shell 600 and one or more secondary apertures 309, as shown in FIG. 2A. The primary apertures 307 and secondary apertures 309 may include nozzles, holes, etc. The air may then exit the combustion chamber 302 through the combustor outlet 308. At the same time, fuel may be injected into the combustion chamber 302 through the primary and/or secondary orifices of a fuel nozzle 322 of a fuel injector system 320, which may be atomized and mixed with air, and then ignited and burned within the combustion chamber 302. The combustor 300 of the engine combustion section 26 may be housed within diffuser case 124 which may define the inner shroud 114 and the outer shroud 116. The combustor 300 is housed within the diffuser case 124 between the inner shroud 114 and the outer shroud 116.

The combustor 300, as shown in FIG. 2A, includes multiple heat shield panels 400 that are attached to one or more shells 600. The heat shield panels 400 may be arranged parallel to the shell 600. The shell 600 includes a radially inward shell 600a and a radially outward shell 600b in a facing spaced relationship defining the combustion chamber 302 therebetween. The shell 600 also includes a forward shell 600c extending between the radially inward shell 600a and the radially outward shell 600b. The forward shell 600c further bounds the combustion chamber 302 on a forward end 300a of the combustor 300. The radially inward shell 600a and the radially outward shell 600b extend circumferentially around the longitudinal engine axis A. The radially inward shell 600a is located radially inward from the radially outward shell 600b.

The heat shield panels 400 can be removably mounted to the shell 600 by one or more attachment mechanisms 332. In some embodiments, the attachment mechanism 332 may be integrally formed with a respective heat shield panel 400, although other configurations are possible. In some embodiments, the attachment mechanism 332 may be a threaded mounting stud or other structure that may extend from the respective heat shield panel 400 through the interior surface to a receiving portion or aperture of the shell 600 such that the heat shield panel 400 may be attached to the shell 600 and held in place. The heat shield panels 400 partially enclose a combustion area 370 within the combustion chamber 302 of the combustor 300.

The fuel nozzle 322 (i.e., blunt body stabilized fuel injector) replaces a pilot nozzle that is typically utilized in a conventional combustor. The fuel nozzle 322 may be utilized specifically with a combustor that burns two fuels as described herein. The two fuels may include but are not limited to a primary fuel 510 and a secondary fuel 550. The primary fuel 510 may be stored in a primary fuel tank 518 and the secondary fuel 550 may be stored in a secondary fuel tank 558. The primary fuel tank 518 is configured to store the primary fuel 510 and the secondary fuel tank 558 is configured to store the secondary fuel 550. In an embodiment, the secondary fuel 550 may be Jet A or Sustainable aviation fuel (SAF) fuel and the primary fuel 510 may be hydrogen. Sustainable aviation fuel (SAF) is an alternative fuel made from non-petroleum feedstocks that reduces emissions from air transportation. SAF can be blended at different levels with limits between 10% and 50%, depending on the feedstock and how the fuel is produced. The hydrogen may be between about 0.5% and 2% of the fuel mixture and the jet A may be about 98% of the fuel mixture. It is understood that the embodiments disclosed herein may be applicable to any percentage composition of fuel based upon the type of primary fuel 510 being used.

The primary fuel 510 is conveyed to the fuel nozzle 322 through a primary fuel line 512 of the fuel injector system 320. The primary fuel tank 518 is fluidly connected to the fuel nozzle 322 through the primary fuel line 512. The secondary fuel 550 is conveyed to the fuel nozzle 322 through a secondary fuel line 552 of the fuel injector system 320. The secondary fuel tank 558 is fluidly connected to at least one of the swirler 326 and the fuel nozzle 322 through the secondary fuel line 552. The primary fuel line 512 provides the primary fuel 510 to the fuel nozzle 322 that is configured to produce a pilot flame 520 within the combustion chamber 302. The secondary fuel line 552 provides the secondary fuel 550 to swirler 326 to produce a main flame 570 within the combustion chamber 302. The fuel nozzle 322 is located within the swirler 326. In other words, the swirler 326 extends around or encircles the fuel nozzle 322. The secondary fuel 550 is injected into the swirler 326 at a secondary fuel injection point 324 located forward of an end 328 of a swirler 326. It is noted that while the tank for the hydrogen or other secondary fuel is identified as the primary fuel, the primary fuel is used as the pilot, and the majority of the fuel burned shall be from the secondary fuel tank 550 and may comprise Jet A or SAF fuel.

The fuel nozzle 322 comprises a nozzle outlet 323 that is located proximate to the end 328 of a swirler 326 or at the end 328 of the swirler 326. The end 328 is located at the inlet 306 of the combustor 300. Advantageously, by extending the fuel nozzle 322 to the end 328, this prevents the pilot flame, fueled by the primary fuel 510, from pulsing in and out from the fuel nozzle 322. In other words, by extending the fuel nozzle 322 to the end 328, this prevents the pilot flame, fueled by the primary fuel 510, from pulsing forward toward the forward end 300a of the combustor 300 and rearward towards a rearward end 300b of the combustor 300.

Referring briefly to FIG. 2C in comparison to FIG. 2B. FIG. 2C illustrates a recessed fuel nozzle 322A. The recessed fuel nozzle 322A of FIG. 2C is shown to illustrate the difference between the recessed fuel nozzle 322A of FIG. 2C and the fuel nozzle 322 of FIG. 2B. The recessed fuel nozzle 322A comprises a nozzle outlet 323A that is not located proximate to the end 328 of the swirler 326 and is not located at the end 328 of the swirler 326. The nozzle outlet 323A is located at an immersion distance ID1 away from the end 328 of the swirler 326. The end 328 is located at the inlet 306 of the combustor 300, or more specifically the combustion chamber 302.

When using the recessed fuel nozzle 322A of FIG. 2C both the secondary fuel 550 and the primary fuel 510 is injected inside the swirler 326 to allow mixing of the secondary fuel 550, the primary fuel 510, and air inside swirler 326 prior to entering the inlet 306. This is as opposed to the fuel nozzle of FIG. 2B, which comprises a nozzle outlet 323 locate proximate or at the inlet 306 so that the primary fuel 510 is injected directly into the combustion area 302 while the secondary fuel 550 continues to mix with air inside the swirler 326 before entering the combustion area 302.

Dual fuel applications are well known to those of ordinary skill in the art. Further examples of prior art engines may be found in US patent 11,920,525 and US patent 10,730,635 both of which are hereby incorporated by reference.

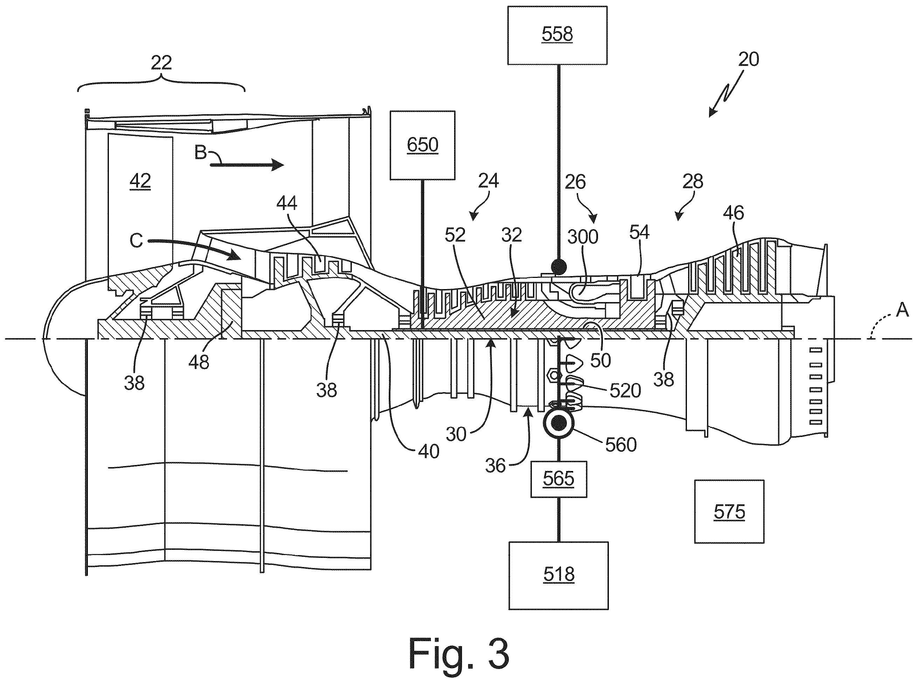

The systems described above are capable of operation with both standard Jet A SAF fuel or other similar fuels and an alternative fuel such as hydrogen. However, the use of hydrogen as the primary fuel 510 has limitation as the volume of fuel necessary to utilize hydrogen fuel is significant. FIG. 3 provides an improved system for operation of a dual fuel application. A secondary fuel tank 550 may provide Jet A or SAF liquid fuel. The standard location for the primary fuel tank or tanks may be in the wings or in the fuselage of the aircraft. The engine 20 may be configured as described above to operate on Jet A SAF fuel or an alternative fuel.

The primary fuel tank 518 may be a cryogenic tank and contain liquid hydrogen. By utilizing a cryogenic tank for fuel tank 518, rather than implementing a conventional fuel tank the hydrogen may be stored as liquid hydrogen. Cryogenic storage tanks are a thermally insulated pressurized tank which allows for the storage of the primary fuel 510 in a liquid form. When stored at room temperature, hydrogen occupies a significantly larger volume compared to when stored in a cryogenic storage tank. Liquefying hydrogen at very low temperatures (- 423 °F (-253 °C)) allows for a much higher density, meaning the same amount of hydrogen can be stored in a much smaller volume within a cryogenic storage tank; typically, the volume of liquid hydrogen in a cryogenic storage tank can be around 800 times smaller than the same mass of hydrogen gas at room temperature.

It has been determined that the introduction of small amounts of hydrogen to the engine may reduce nvPM thereby reducing the likelihood of contrails. Applicant has found that the introduction of hydrogen in the range from 3% to 10% may reduce the likelihood of contrail production. For example, at 3% hydrogen for short periods of time, the likelihood of contrail production is reduced.

As discussed earlier, contrails do not occur in all conditions. A contrail may form when exhaust gases cool and mix with surrounding air, if the humidity becomes high enough (or, equivalently, the air temperature becomes low enough) for liquid water condensation to occur. The level of humidity reached depends on the amount of water present in the surrounding air, the temperature of the surrounding air, and the amount of water and heat emitted in the exhaust. Atmospheric temperature and humidity at any given location undergo natural daily and seasonal variations and hence, are not always suitable for the formation of contrails. Therefore, the use of hydrogen to reduce the production of contrails may be limited to those times when the conditions are ripe for the production of contrails.

As shown in FIG. 3, a control valve 565 may be introduced to the primary fuel line 560. An electronic engine control 575 may further be provided to actuate control valve 565 when it is desired to inject hydrogen into the engine 20. The electronic engine control 575 may receive a signal from a sensor or series of sensors on the aircraft (not shown) indicating that the conditions are such that contrails may form. Alternatively, the electronic engine control 575 may receive an input from the avionics system or other source that contrails may be prevalent or that local restrictions require contrail abatement. Avionics systems generally comprise GPS or other location tracking systems and are able to determine the specific location of the aircraft. The avionics system may either be preprogramed with information, or they may receive a communication indicating contrail requirements. For example, the local or national government may enact an ordinance requiring contrail abatement when over flying certain locations. Additionally, air traffic control may provide updates or instructions regarding contrail requirements. When the electronic engine control determines contrail abatement is necessary, it may open valve 565 to introduce hydrogen into the system.

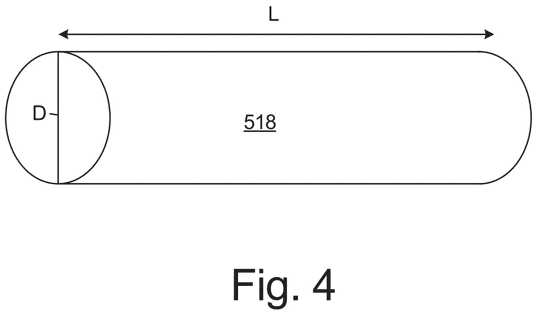

FIG. 4 illustrates a liquid hydrogen cryogenic tank 518. With the addition of a cryogenic tank 518, it is possible to store sufficient liquid hydrogen to meet the normal demands of an aircraft. It is known that for typical system a system may utilize 1,500 gallons (6,819 liters) of Jet A fuel. Therefore, to have 3% hydrogen available, 100lbs (45.4 kg) of liquid hydrogen may meet the flight requirements. For example, a cryogenic tank 518 that is 2.5 feet (0.76 m) in diameter (D) and 5 feet (1.5 m) long at 1 ATM could store 100lbs (45.4 kg) of liquid hydrogen. To meet the flight requirements, two such tanks may be sufficient, one for each engine.

The cryogenic tanks 518 may be stored near the engines in the wing or alternatively in an engine wing as disclosed in US patent 10,730,635 to Snyder et al and hereby incorporated by reference. By storing the cryogenic tanks 518 at or near the engine, it is also possible to utilize the liquid hydrogen to cool the system. In one embodiment, by placing the cryogenic tanks 518 in an engine wing as shown in the '635 patent, the cryogenic tanks 518 may be isolated from the primary fuel tanks 550 and the main fuselage.

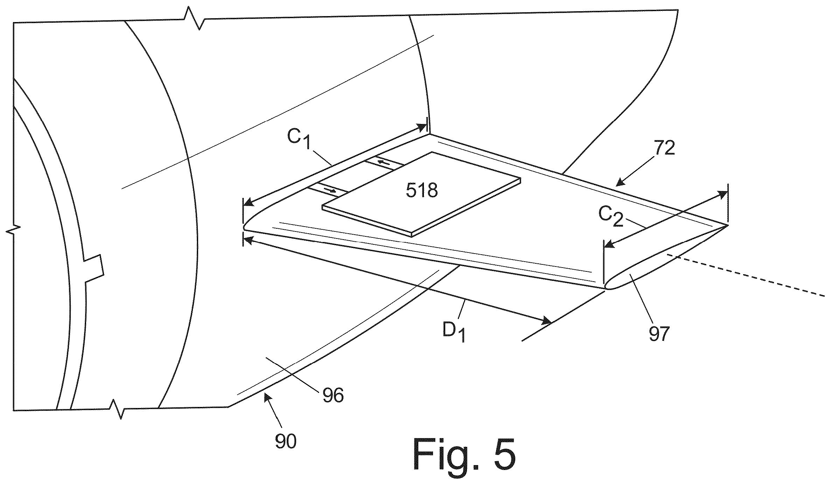

An engine wing is illustrated in FIG. 5. Engine wing 72 is configured to provide a lift force in addition engine wing 72 may be utilized to contain tank 558. In the example of FIG. 5, the engine wing 72 projects radially outward from the nacelle 90, namely the fan cowl section 96, by a distance D1 within a range between 0.30 and 0.74 of (i.e., multiplied by) a diameter of the fan. The diameter of the fan in this example may be the inner diameter of the nacelle 90. The engine wing 72 is airfoil-shaped in cross-section. In particular, in the example of FIG. 5, the engine wing 72 has a first chord C1 adjacent to the nacelle 90 and a second chord C2 less than the first chord C1 adjacent a tip 97 of the engine wing 72. A cryogenic tank 518 may be incorporated into engine wing 72. The arrangement of the engine wing 72 radially outside the nacelle 90 makes the engine wing 72 effective as a heat sink and may assist in maintaining the cryogenic tank 518 at a low temperature. The cryogenic tank 518, may be configured such that it fits within the engine wing 72. In one embodiment, the volume of the cryogenic tank 518 should be at or about 25 cubic feet (0.71 cubic meters) for each engine. As each engine may have two engine wings 72, each wing would need a tank 518 of approximately 12.5 cubic feet (0.35 cubic meters). Therefore, the tank could be approximately 6 inches (15.2 centimeters) thick and be approximately 6 feet (1.82 m) wide and 4 feet (1.22 m) long.

As shown in FIG. 3, fuel from the secondary tank 558 may be utilized to cool the turbofan engine 20 through cooling lines 520. As the fuel cools the engine, it increases its thermal temperature. The secondary fuel may increase in temperatures in excess of 2000 °F (1093 °C). When jet A fuel is heated to these temperatures, the fuel is susceptible to coking. To reduce the coking it is desired to cool the secondary fuel. The primary fuel from primary fuel tank 518 may provide the primary fuel to cool the secondary fuel with cooling lines 560 about the primary fuel line 520. In addition, the liquid hydrogen may cool the fuel manifold, the fuel nozzle 322, or other TMS components by gasifying the hydrogen prior to injecting it into the combustor.

In an alternative embodiment, for example, in the event liquid hydrogen is not available an alternative secondary fuel such as liquefied natural gas (LNG) may be stored in the primary fuel tank 518. It is known that liquified natural gas at about -260 °F (-162 °C) reduces in volume to 1/600^{th} the volume of natural gas at atmospheric temperatures. While the liquid natural gas may or may not be burned as a fuel in the same manner as hydrogen, it is possible to utilize the liquid natural gas a cooling means for the secondary fuel similar to that as described for liquid hydrogen. In an additional embodiment, in the event a liquified fuel is unavailable. It is possible to store a cooling chemical such as nitrogen in the cryogenic tank 518. While in this embodiment, the liquid nitrogen will not be available as fuel, the liquid nitrogen, stored at below -320 °F (-196 °C) could be utilized to cool the secondary fuel.

As described, the system may run solely on Jet A or SAF fuel. An advantage of the system described is that when an aircraft lands at an airport that does not have liquid hydrogen available, it is possible to fly without filling the liquid hydrogen tanks. Further, if the flight requirements are such that the liquid hydrogen on board is fully utilized, the aircraft may continue to fly without the injection of hydrogen. As a result, the system provides flexibility to adjust to the available fuel systems.

Further, as shown in FIG. 3, during ground operation, it may be that the engine 20 receives additional power from an electric motor 650 connected to inner shaft 40 or geared architecture 48 to drive the fan 42 while on the ground. When an engine receives power from an electric motor, the necessity to power the engine with fuel is lowered. The engine thereby reduces fuel flow and spools down and may run poorly. As a result, there is a risk of lean blow out, i.e. the flame in the engine is extinguished, requiring a restart of the engine. In addition, there is increased generation of carbon monoxide and unburned hydrocarbons in the exhaust from the engine 20. In an alternative embodiment engine control 575 may open control valve 565 to introduce hydrogen when a low fuel flow from the secondary fuel 550 is present. As it has been found that an engine may run on hydrogen at a lower burn than with Jet A fuel.

In an alternative embodiment, low burn may occur when the gas turbine engine 20 is in an idle position. For example, when the aircraft is at the gate waiting until its next flight, the gas turbine engine 20 may be in an idle state. As discussed above, when the gas turbine engine is in a low operation state, the burn temperature of the secondary fuel may be lower. In an alternative embodiment, the engine control 570, may provide additional hydrogen to the gas turbine engine which will result in a higher burn temperature, while at idle. The higher temperature burn will minimize the production of carbon monoxide and will also minimize the amount of unburned hydrocarbons.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A fuel delivery system for a combustor of a gas turbine engine, the fuel delivery system comprising:
a primary fuel tank configured to store liquid hydrogen;
a secondary fuel tank configured to store fuel;
a primary fuel line fluidly connecting the primary fuel tank to a first fuel nozzle;
a secondary fuel line fluidly connecting the secondary fuel tank to a second fuel nozzle;
a control valve configured to control the flow of liquid hydrogen in the primary fuel line; and
an engine control configured to control the control valve.

2. The fuel delivery system of claim 1, further comprising one or more sensors to sense one or more atmospheric conditions near the gas turbine engines, wherein the engine control is configured to receive input from sensors, wherein the engine control is configured to open the control valve when contrails are likely to occur.

3. The fuel delivery system of claim 1 or 2, further comprising avionic controls, wherein the avionic controls provide an input to the engine control, wherein the avionics controls are configured to determine when abatement of contrails is desired, wherein the engine control is configured to open the control valve when the input is received.

4. The fuel delivery system of any preceding claim, wherein the control valve is configured to deliver a fuel mixture to the fuel nozzle, the fuel mixture containing between 3% and 10% of hydrogen.

5. The fuel delivery system of claim 4, wherein the control valve is configured to provide 3 % of hydrogen to the fuel nozzle.

6. The fuel delivery system of any preceding claim, further comprising:
first cooling lines configured to allow the secondary fuel to cool the gas turbine engine; and
second cooling lines configured to allow the primary fuel to cool the secondary fuel, wherein the second cooling lines are configured to cool the gas turbine engine.

7. The fuel delivery system of any preceding claim, wherein the primary tank comprises a cryogenic tank.

8. The fuel delivery system of claim 7, wherein the primary tank comprises two or more cryogenic tanks.

9. The fuel delivery system of claim 8, wherein the two or more cryogenic tanks are located in one or more wings of an aircraft.

10. The fuel delivery system of claim 8, wherein the two or more cryogenic tanks are located in an engine wing mounted to the gas turbine engine.

11. A fuel delivery system for a combustor of a gas turbine engine, the fuel delivery system comprising:
a cryogenic tank, wherein the cryogenic tank is configured to store one of liquid natural gas, liquid nitrogen, and liquid hydrogen;
a secondary fuel tank configured to store fuel;
a cooling line fluidly connecting the cryogenic tank; and
a secondary fuel line fluidly connecting the secondary fuel tank to a fuel nozzle, wherein the cooling line is configured to cool the gas turbine engine.

12. A fuel delivery system of claim 11, wherein the cryogenic fuel tank is configured to store a primary fuel, and the fuel deliver system further comprises:
a primary fuel line fluidly connecting the cryogenic fuel tank to a first fuel nozzle, wherein the secondary fuel line fluidly connects the secondary fuel tank to a second fuel nozzle;
a control valve configured to control the flow of the primary fuel in the primary fuel line; and
an engine control configured to control the control valve.

13. The fuel delivery system of claim 12, wherein the engine control is configured to monitor engine operation and wherein the engine control is configured to open the control valve when a low fuel flow from the secondary fuel tank is present.

14. The fuel delivery system of claim 12 or 13, wherein the gas turbine engine is configured to receive power from a battery, wherein the engine control is configured to open the control valve when the gas turbine engine receives power from the battery.

15. The fuel delivery system of any of claims 12 to 14, wherein the engine control is configured to monitor engine operation and wherein the engine control is configured to open the control valve when the gas turbine engine is in an idle position.
